# EUROPEAN PATENT APPLICATION

(11) **EP 4 387 070 A1**
(43) Date of publication of application: **19.06.2024**
(21) Application number: 22213679.8
(22) Date of filing: 15.12.2022
(51) Int. Cl.: H02M 3/00, H02M 3/335, H02M 1/00, H05B 45/39

(54) **RESONANT HYBRID FLYBACK CONVERTER FOR A LED-BASED LOAD**

(71) Applicant: Tridonic GmbH & Co KG, 6851 Dornbirn (AT)
(72) Inventor: Maldoner, Jakob, 6850 Dornbirn (AT); Schneider, Miguel Philipp, 6850 Dornbirn (AT); Marte, Patrick, 6850 Dornbirn (AT)
(74) Representative: Rupp, Christian

(57) **Abstract**

A resonant hybrid flyback converter (10) for a LED-based load (13c) is provided. Said resonant hybrid flyback converter (10) comprises a half-bridge (11) comprising a high-side switch (11a) and a low-side switch (11b), a flyback resonant tank (12) comprising a transformer with a primary side (15a) and a secondary side (15b), and a processing unit (14). In this context, the half-bridge (11) is configured to supply said primary side (15a). Additionally, the secondary side (15b) is configured to supply the LED-based load (13c). Furthermore, the processing unit (14) is configured to receive at least one feedback signal based on a sensed secondary side current with respect to the secondary side (15b). Moreover, the processing unit (14) is configured to control an on-time of the low-side switch (11b) and/or an on-time of the high-side switch (11a) on the basis of the at least one feedback signal.

## Description

The invention relates to a resonant hybrid flyback converter for a LED-based load. In this context, it is noted that "hybrid flyback" can especially be understood as "half-bridge circuit supplying a flyback resonant tank".

Generally, in times of an increasing use of LED lighting means in many different areas of life, there is a growing need of a resonant hybrid flyback converter for a LED-based load, a system comprising such a resonant hybrid flyback converter and a LED-based load, and a method for operating a resonant hybrid flyback converter for a LED-based load in order to ensure an efficient and reliable supply of said LED-based load.

However, there are no resonant hybrid flyback converters allowing for such improvements especially in the sense of a particularly high efficiency and reliability regarding supply.

Accordingly, there is the object to provide a resonant hybrid flyback converter for a LED-based load, a system comprising such a resonant hybrid flyback converter and a LED-based load, and a method for operating a resonant hybrid flyback converter for a LED-based load, thereby ensuring a particularly high efficiency and reliability.

This object is solved by the features of the first independent claim for a resonant hybrid flyback converter for a LED-based load, the features of the second independent claim for a system comprising such a resonant hybrid flyback converter and a LED-based load, and the features of the third independent claim for a method for operating a resonant hybrid flyback converter for a LED-based load. The dependent claims contain further developments.

According to a first aspect of the invention, a resonant hybrid flyback converter for a LED-based load is provided. Said resonant hybrid flyback converter comprises a half-bridge comprising a high-side switch and a low-side switch, a flyback resonant tank comprising a transformer with a primary side and a secondary side, and a processing unit. In this context, the half-bridge is configured to supply said primary side. Additionally, the secondary side is configured to supply the LED-based load. Furthermore, the processing unit is configured to receive at least one feedback signal based on a sensed secondary side current with respect to the secondary side. Moreover, the processing unit is configured to control an on-time of the low-side switch and/or an on-time of the high-side switch on the basis of the at least one feedback signal. Advantageously, the LED-based load can be supplied in a particularly efficient and reliable manner.

According to a first preferred implementation form of the first aspect of the invention, the resonant hybrid flyback converter or the processing unit comprises a current transformer with a first side and a second side for sensing the secondary side current. In addition to this or as an alternative, the resonant hybrid flyback converter is operated as a current-regulated resonant hybrid flyback converter and/or as a constant current source. Advantageously, for instance, the secondary side current can accurately be sensed, thereby increasing both efficiency and reliability.

According to a second preferred implementation form of the first aspect of the invention, the first side, especially the corresponding first winding of the current transformer, is connected in series to the secondary side, especially the corresponding secondary winding of the transformer. Advantageously, for example, complexity can be reduced, which leads to an increased efficiency.

According to a further preferred implementation form of the first aspect of the invention, the first side, especially the corresponding first winding of the current transformer, is connected in series to the secondary side, especially the corresponding secondary winding of the transformer, via a diode, preferably a rectifier diode. Advantageously, for instance, simplicity can be increased, thereby reducing inefficiencies.

According to a further preferred implementation form of the first aspect of the invention, the at least one feedback signal comprises or is the secondary side current and/or a filtered version, preferably a lowpass filtered version, of the secondary side current. Advantageously, for example, component needs can be reduced, thereby reducing costs, and thus increasing efficiency.

According to a further preferred implementation form of the first aspect of the invention, the resonant hybrid flyback converter or the processing unit comprises a resistor, preferably a shunt resistor, for converting the secondary side current into a corresponding sensing voltage. Advantageously, for instance, efficiency, especially cost-efficiency, can be increased.

It is noted that it might be particularly advantageous if the current transformer, preferably the second side of the current transformer, comprises said resistor, especially said shunt resistor.

According to a further preferred implementation form of the first aspect of the invention, the at least one feedback signal comprises or is the sensing voltage. Advantageously, for example, a further processing of the at least one feedback signal can efficiently be performed with the aid of the processing unit.

According to a further preferred implementation form of the first aspect of the invention,, especially on the basis of the at least one feedback signal or on the basis of the at least one feedback signal comprising or being the sensing voltage, the processing unit is configured to monitor a peak value of the secondary side current preferably in order to detect an overcurrent situation and/or to trigger security measures, especially security measures in the sense of controlling the on-time of the low-side switch and/or the on-time of the high-side switch accordingly. Advantageously, for instance, a particularly safe operation can be guaranteed, which does not only increase efficiency but also reliability.

According to a further preferred implementation form of the first aspect of the invention, the security measures, especially security measures in the sense of controlling the on-time of the low-side switch and/or the on-time of the high-side switch accordingly, comprise at least one of a change of the corresponding operation frequency or duty cycle of the resonant hybrid flyback converter, or a complete switching off of the resonant hybrid flyback converter, or any combination thereof. Advantageously, for example, any damage of the LED-based load can reliably be prevented.

According to a further preferred implementation form of the first aspect of the invention, the resonant hybrid flyback converter or the processing unit comprises a filter, preferably a lowpass filter, for filtering, preferably lowpass filtering, the sensing voltage in order to form a filtered version, preferably a lowpass filtered version, of the sensing voltage. Advantageously, for instance, accuracy with respect to controlling the on-time of the low-side switch and/or the on-time of the high-side switch can further be increased, which leads to an increased efficiency and reliability.

It is noted that it might be particularly advantageous if the filter, preferably the lowpass filter, comprises a resistance, especially a resistor, and/or a capacitance, especially a capacitor.

According to a further preferred implementation form of the first aspect of the invention, the at least one feedback signal comprises or is the filtered version, preferably the lowpass filtered version, of the sensing voltage. Advantageously, for example, the sensing voltage can be provided as a first feedback signal, whereas the filtered version, preferably the lowpass filtered version, of the sensing voltage can be provided as a second feedback signal. In this context, further advantageously, detecting an overcurrent situation and/or triggering security measures and controlling the on-time of the low-side switch and/or the on-time of the high-side switch can be performed simultaneously.

According to a further preferred implementation form of the first aspect of the invention, especially on the basis of the at least one feedback signal or on the basis of the at least one feedback signal comprising or being the filtered version, preferably the lowpass filtered version, of the sensing voltage, the processing unit is configured to compare the at least one feedback signal with at least one nominal value in order to form a function of corresponding control value difference. In this context, the processing unit is preferably configured to control the on-time of the low-side switch and/or the on-time of the high-side switch in accordance with the function of the corresponding control value difference. Advantageously, for instance, accuracy, and thus also efficiency, can further be increased.

According to a further preferred implementation form of the first aspect of the invention, the resonant hybrid flyback converter or the processing unit comprises an analog-to-digital converter for digitizing the at least one feedback signal. In addition to this or as an alternative, the secondary side current is exclusively sensed in every corresponding second half wave. Advantageously, for example, energy is not transferred to the secondary side in every switching state, thereby increasing safeness of operation.

According to a second aspect of the invention, a system is provided. Said system comprises a resonant hybrid flyback converter according to the first aspect of the invention or any of its preferred implementation forms, respectively, and a LED-based load being supplied by said resonant hybrid flyback converter. Advantageously, the LED-based load can be supplied in a particularly efficient and reliable manner.

According to a third aspect of the invention, a method for operating a resonant hybrid flyback converter for a LED-based load is provided. Said method comprises the steps of receiving at least one feedback signal based on a sensed secondary side current with respect to a secondary side of a transformer of a flyback resonant tank of the resonant hybrid flyback converter, and controlling an on-time of a low-side switch of a half-bridge of the resonant hybrid flyback converter and/or an on-time of a high-side switch of the half-bridge of the resonant hybrid flyback converter on the basis of the at least one feedback signal. Advantageously, the LED-based load can be supplied in a particularly efficient and reliable manner.

It is noted that all the explanations or further implementation forms according to the first aspect of the invention analogously apply for the third aspect of the invention.

Exemplary embodiments of the invention are now further explained with respect to the drawings by way of example only, and not for limitation. In the drawings:
- Fig. 1A: shows an exemplary embodiment of the first aspect of the invention in combination with the second aspect of the invention;
- Fig. 1B: shows a further exemplary embodiment of the first aspect of the invention in combination with the second aspect of the invention;
- Fig. 2A: shows an exemplary circuit diagram for further illumination of Fig. 1A;
- Fig. 2B: shows an exemplary circuit diagram for further illumination of Fig. 1B; and
- Fig. 3: shows a flow chart of an embodiment of the third aspect of the invention.

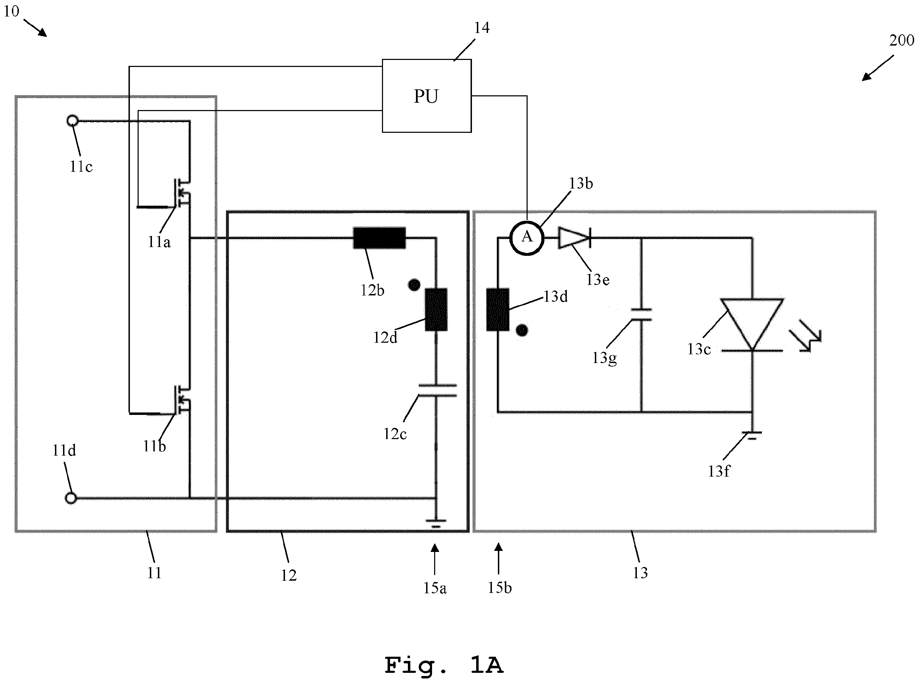

With respect to Fig. 1A, an exemplary embodiment of the inventive resonant hybrid flyback converter 10 for a LED-based load, exemplarily a LED (light-emitting diode) 13c, is depicted.

For the sake of completeness, it is noted that said Fig. 1A additionally illustrates an exemplary embodiment of the inventive system 200 comprising said resonant hybrid flyback converter 10 and said LED-based load, exemplarily said LED 13c, being supplied by the resonant hybrid flyback converter 10.

In accordance with Fig. 1A, the resonant hybrid flyback converter 10 comprises a half-bridge 11 comprising a high-side switch, exemplarily a first field-effect transistor 11a, and a low-side switch, exemplarily a second field-effect transistor 11b.

With respect to said field-effect transistors 11a and 11b, it is noted that said transistors are exemplarily of an n-channel enhancement type.

Furthermore, the resonant hybrid flyback converter 10 comprises a flyback resonant tank 12 comprising a transformer with a primary side 15a and a secondary side 15b. It is noted that the half-bridge 11 is configured to supply said primary side 15a, wherein the secondary side 15b is configured to supply the LED-based load, exemplarily the LED 13c.

Moreover, the above-mentioned primary side 15a comprises a series connection of a leakage inductance 12b, which can be optional or omitted, respectively, a corresponding transformer main inductance 12d and a capacitance 12c, exemplarily a resonance capacitor. In this context, it is noted that a half-bridge current as referred to in the following especially flows through said series connection.

As it can further be seen from Fig. 1A, the resonant hybrid flyback converter 10 further comprises supplying means 13 being configured to be supplied by the secondary side 15b and to supply the LED-based load or the LED 13c, respectively.

In this context, the supplying means 13 comprise a switch and/or a diode, exemplarily a diode 13e, and a capacitance, exemplarily an output capacitor 13g.

Furthermore, the capacitance 13g is exemplarily connected in parallel to the LED 13c, whereas the diode 13e is exemplarily connected in series to said parallel connection of the LED 13c and the capacitance 13g.

In particular, a first terminal of a transformer secondary inductance 13d is connected via current sensing means 13b to a first terminal, exemplarily an anode terminal, of the diode 13e, whereas a second terminal, exemplarily a cathode terminal, of said diode 13e is connected to a first terminal of the capacitance 13g and to a first terminal of the LED 13c.

In addition this, a second terminal of the transformer secondary inductance 13d is connected to a second terminal of the capacitance 13g and to a second terminal of the LED 13c. Said second terminal of the LED 13c is exemplarily connected to a first voltage potential, preferably ground, more preferably ground 13f of the secondary side 15b.

Again, with respect to the half-bridge 11, it is noted that a first terminal, exemplarily a drain terminal, of the first field-effect transistor 11a is connected to a second voltage potential, preferably a supply voltage 11c, wherein a second terminal, exemplarily a source terminal, of said first field-effect transistor 11a is connected to a first terminal, exemplarily a drain terminal, of the second field-effect transistor 11b. Additionally, a second terminal, exemplarily a source terminal, of said second field-effect transistor 11b is connected to a third voltage potential, preferably ground, more preferably ground 11d of the primary side 15a.

With respect to the above-mentioned series connection of primary side 15a or the resonant tank 12, respectively, it is noted that the first terminal, exemplarily the drain terminal, of the second field-effect transistor 11b is connected to a first terminal of the leakage inductance 12b, wherein a second terminal of said leakage inductance 12b is connected to a first terminal of the transformer main inductance 12d. Additionally, a second terminal of said transformer main inductance 12d is connected to a first terminal of the capacitance 12c, wherein a second terminal of said capacitance 12c is connected to the second terminal, exemplarily the source terminal, of the second field-effect transistor 11b.

Furthermore, the resonant hybrid flyback converter 10 comprises a processing unit 14, wherein the processing unit 14 is configured to receive at least one feedback signal based on a sensed secondary side current with respect to the secondary side 15b, wherein said secondary side current is preferably sensed with the aid of the current sensing means 13b.

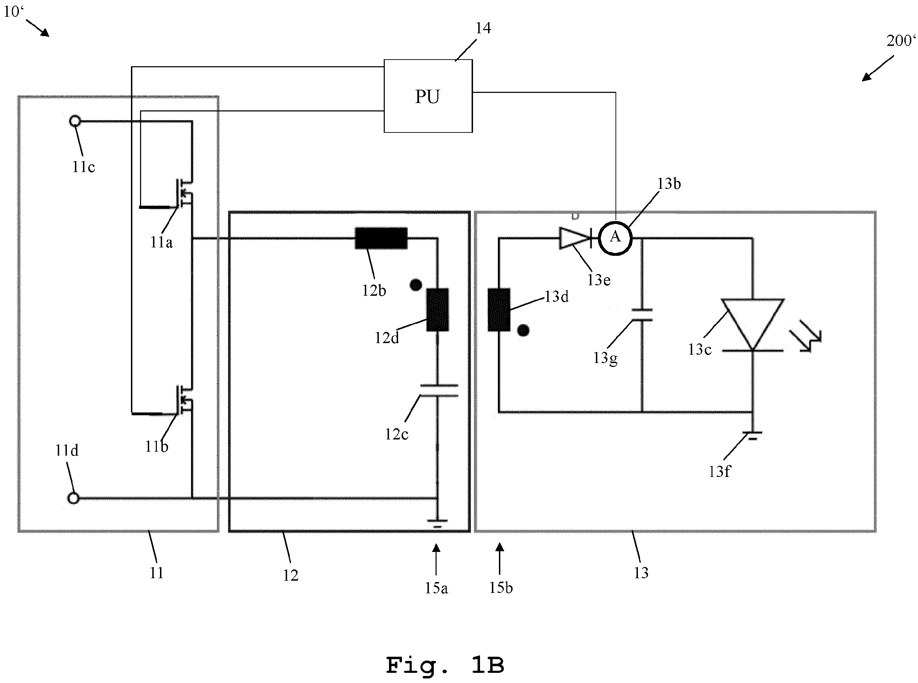

In this context, as already mentioned above, the resonant hybrid flyback converter 10 exemplarily comprises the current sensing means 13b especially being connected in series to the transformer secondary inductance 13d. As an alternative, it is noted that the current sensing means 13b can be connected in series to the transformer secondary inductance 13d via the above-mentioned diode 13e, which is illustrated by Fig. 1B exclusively differing from Fig. 1A in said alternative. It is further noted that the processing unit 14 is exemplarily connected to said current sensing means 13b.

In addition to this, the processing unit is configured to control an on-time of the low-side switch, exemplarily the second field-effect transistor 11b, and/or an on-time of the high-side switch, exemplarily the first field-effect transistor 11a, on the basis of the at least one feedback signal.

In this context, the processing unit 14 is exemplarily connected to a third terminal, exemplarily a gate terminal, of the first field-effect transistor 11a, and/or to a third terminal, exemplarily a gate terminal, of the second field-effect transistor 11b.

It might be particularly advantageous if the processing unit 14 is configured to adjust an operating point with respect to controlling the on-time of the high-side switch, exemplarily the first field-effect transistor 11a, on the basis of controlling the on-time of the low-side switch, exemplarily the second field-effect transistor 11b.

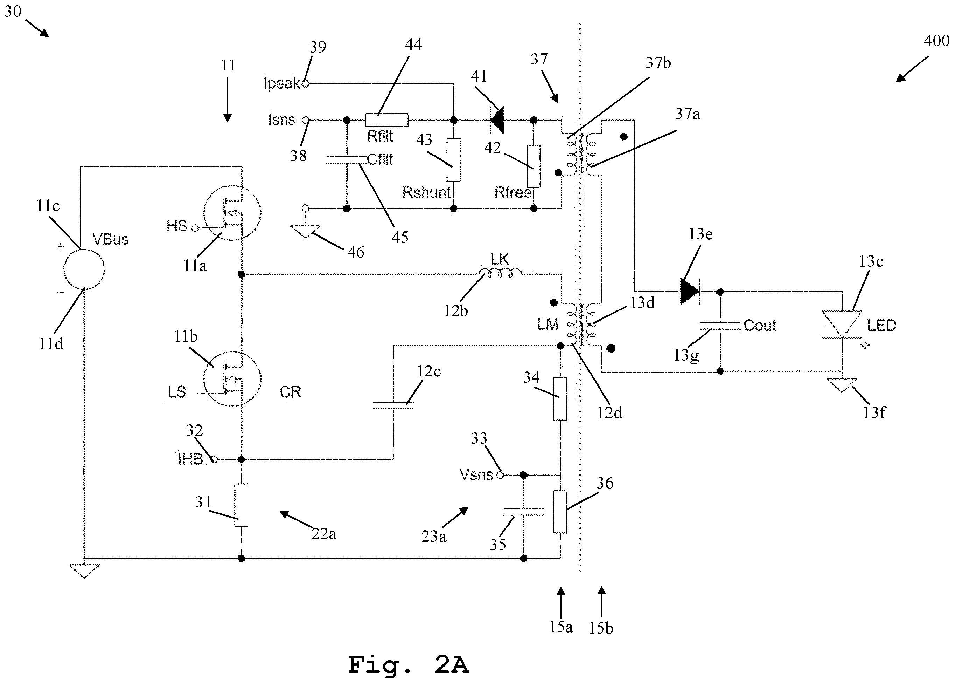

Now, with respect to Fig. 2A, an exemplary circuit diagram 30 for further illumination of Fig. 1A is shown. In this context, it is noted that for the sake of compactness, elements having already been explained above are not elucidated again but equipped with the same reference signs. It is noted that all the explanations above regarding Fig. 1A analogously apply for Fig. 2A and vice versa.

By analogy with Fig. 1A, it is noted that said Fig. 2A additionally illustrates an exemplary embodiment of the inventive system 400 comprising the resonant hybrid flyback converter 30 and the LED-based load, exemplarily the LED 13c, being supplied by the resonant hybrid flyback converter 30.

With respect to the current sensing means 13b of Fig. 1A, as it can be seen from Fig. 2A, it is noted that said current sensing means 13b may comprise or be a current transformer 37 with a first side 37a and a second side 37b for sensing the secondary side current.

It is further noted that the first side 37a, especially the corresponding first winding of the current transformer 37, is connected in series to the secondary side 15b, especially the corresponding secondary winding of the transformer or the transformer secondary inductance 13d, respectively.

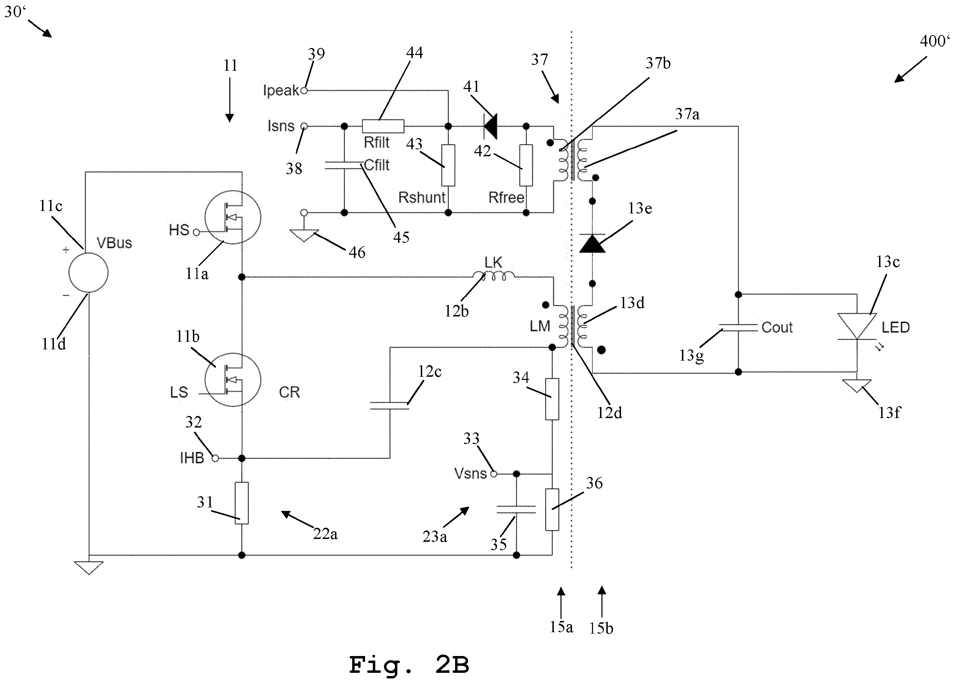

Especially as an alternative, the first side 37a, especially the corresponding first winding of the current transformer 37, can be connected in series to the secondary side 15b, especially the corresponding secondary winding of the transformer or the transformer secondary inductance 13d, respectively, via the diode 13e preferably being a rectifier diode. Said alternative is illustrated by Fig. 2B, which exclusively differs from Fig. 2A in said alternative. In the light of Fig. 2A and Fig. 2B, it is noted that the embodiment according to Fig. 2B may be the preferred one, which may analogously apply for Fig. 1A and Fig. 1B.

With respect to the at least one feedback signal, it is noted that it might be particularly advantageous if the at least one feedback signal comprises or is the secondary side current and/or a filtered version, preferably a lowpass filtered version, of the secondary side current.

Furthermore, the resonant hybrid flyback converter 30 or the second side 37b of the current transformer 37 can comprise a resistor, preferably a shunt resistor 43, for converting the secondary side current into a corresponding sensing voltage. Alternatively, the processing unit 14 of Fig. 1A can comprise such a resistor.

In this context, it might be particularly advantageous if the at least one feedback signal comprises or is the sensing voltage.

Moreover, it might be particularly advantageous if, especially on the basis of the at least one feedback signal or on the basis of the at least one feedback signal comprising or being the sensing voltage, the processing unit 14 is configured to monitor a peak value of the secondary side current preferably in order to detect an overcurrent situation and/or to trigger security measures, especially security measures in the sense of controlling the on-time of the low-side switch, exemplarily the second field-effect transistor 11b, and/or the on-time of the high-side switch, exemplarily the first field-effect transistor 11a, accordingly.

In this context, the security measures, especially security measures in the sense of controlling the on-time of the low-side switch, exemplarily the second field-effect transistor 11b, and/or the on-time of the high-side switch, exemplarily the first field-effect transistor 11a, accordingly, may comprise at least one of a change of the corresponding operation frequency or duty cycle of the resonant hybrid flyback converter 10 or 30, respectively, or a complete switching off of the resonant hybrid flyback converter 10 or 30, respectively, or any combination thereof.

Furthermore, the resonant hybrid flyback converter 30 or the second side 37b of the current transformer 37 may comprise a filter, preferably a lowpass filter, for filtering, preferably lowpass filtering, the sensing voltage in order to form a filtered version, preferably a lowpass filtered version, of the sensing voltage. Exemplarily, said filter comprises a resistor 44 and a capacitor 45. Especially as an alternative, the processing unit 14 according to Fig. 1A can comprise such a filter.

In this context, it might be particularly advantageous if the at least one feedback signal comprises or is the filtered version, preferably the lowpass filtered version, of the sensing voltage.

Moreover, it might be particularly advantageous if, especially on the basis of the at least one feedback signal or on the basis of the at least one feedback signal comprising or being the filtered version, preferably the lowpass filtered version, of the sensing voltage, the processing unit 14 is configured to compare the at least one feedback signal with at least one nominal value in order to form a function of corresponding control value difference.

In addition to this, the processing unit 14 may preferably be configured to control the on-time of the low-side switch, exemplarily the second field-effect transistor 11b, and/or the on-time of the high-side switch, exemplarily the first field-effect transistor 11a, in accordance with the function of the corresponding control value difference.

It is noted that it might be particularly advantageous if the resonant hybrid flyback converter 10 or 30, respectively or the processing unit 14 or the second side 37b of the current transformer 37 comprises an analog-to-digital converter for digitizing the at least one feedback signal.

In addition to this or as an alternative, it might be particularly advantageous if the secondary side current is exclusively sensed in every corresponding second half wave.

Especially for the sake of completeness, all connections according to Fig. 2A are described in the following.

As it can be seen from Fig. 2A, the resonant hybrid flyback converter 30 additionally allows for a half-bridge current sensing 22a. Especially in the context of said half-bridge current sensing 22a, the processing unit 14 can be configured to sense a half-bridge current with respect to the primary side 15a. Additionally or alternatively, the processing unit 14 can be configured to control the on-time of the high-side switch, exemplarily first field-effect transistor 11a, on the basis of a peak detection with respect to the half-bridge current.

As it can further be seen from said Fig. 2A, the half-bridge current sensing 22a can be performed at the base of the half bridge 11 exemplarily at terminal 32. In this context, it is noted that Fig. 2A differs from Fig. 1A especially in that the connection of the drain terminal of the second field-effect transistor 11b to the corresponding terminal of the capacitance 12c is not directly connected to the voltage potential 11d but to said terminal 32, wherein the terminal 32, exemplarily being a half-bridge current sensing terminal, is connected to a first terminal of a resistance 31 and a second terminal of said resistance 31 is connected to the voltage potential 11d. It is noted that the terminal 32, exemplarily the half-bridge current sensing terminal, can be connected to the processing unit 14.

Furthermore, in the sense of an optional LED voltage sensing 23a or an optional output voltage sensing, respectively, the output voltage or LED voltage, respectively, can be measured at the terminal 33, exemplarily being a LED voltage sensing terminal, especially knowing the winding ratio of the transformer. The measurement may preferably be made when the discharge of the transformer occurs in the blocking phase of the high-side switch 11a. In this context, it is noted that the LED voltage minus the forward voltage of the diode 13e at the output of the transformer is present on the secondary side 15b as long as this diode 13e is conducting. It is noted that the terminal 33, exemplarily the LED voltage sensing terminal, can be connected to the processing unit 14.

In this context, it might be particularly advantageous if the processing unit 14 is configured to control the on-time of the low-side switch or the second field-effect transistor 11b, respectively, such that for the case that the LED voltage increases, the on-time of the low-side switch or the second field-effect transistor 11b, respectively, decreases, and/or such that for the case that the LED voltage decreases, the on-time of the low-side switch or the second field-effect transistor 11b, respectively, increases.

It is further noted that in the context of the LED voltage sensing 23a or the output voltage sensing, respectively, Fig. 2A differs from Fig. 1A especially in that the connection between the transformer main inductance 12d and the capacitance 12c is additionally connected to a first terminal of a resistance 34, wherein a second terminal of said resistance 34 is connected to the above-mentioned terminal 33, exemplarily the above-mentioned LED voltage sensing terminal. Additionally, said terminal 33 is connected to the above-mentioned voltage potential 11d via a parallel connection of a resistance 36 and a capacitance 35.

With respect to the above-mentioned current transformer 37, especially the second side 37b thereof, it is noted that a first terminal of the second side 37b or of the corresponding second winding, respectively, of the current transformer 37 may be connected to a first terminal of a resistor 42, whereas a second terminal of said resistor may be connected to a second terminal of the second side 37b or of the corresponding second winding, respectively, of the current transformer 37.

As it can further be seen from Fig. 2A, the first terminal of the second side 37b or of the corresponding second winding, respectively, of the current transformer 37 may be connected to a first terminal, especially an anode terminal, of a diode 41, whereas a second terminal, especially a cathode terminal, of said diode 41 may be connected to a first terminal of a resistor 43, especially a shunt resistor.

The first terminal of said resistor 43, especially said shunt resistor, may be connected to a terminal 39 preferably for providing the above-mentioned sensing voltage.

Furthermore, a second terminal of the resistor 43, especially the shunt resistor, may be connected to the second terminal of the second side 37b or of the corresponding second winding, respectively.

Moreover, the second terminal, especially the cathode terminal, of the diode 41 may be connected to a first terminal of a resistor 44, whereas a second terminal of said resistor 44 is connected to a terminal 38 preferably for providing the above-mentioned filtered version, exemplarily the lowpass filtered version, of the sensing voltage.

It is noted that the second terminal of the resistor 44 may be connected to a first terminal of a capacitor 45, whereas a second terminal of said capacitor 45 may be connected to the second terminal of the second side 37b or of the corresponding second winding, respectively, of the current transformer 37.

It is further noted that the second terminal of the second side 37b or of the corresponding second winding, respectively, of the current transformer 37 may be connected to a fourth voltage potential, preferably ground, more preferably ground 46 of the second side 37b.

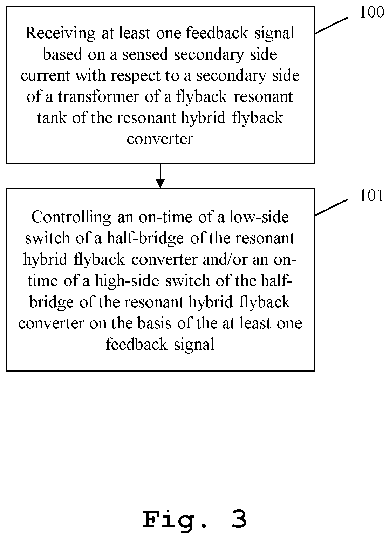

Finally, Fig. 3 illustrates a flow chart of an exemplary embodiment of the inventive method for operating a resonant hybrid flyback converter, especially an inventive resonant hybrid flyback converter such as the one of Fig. 1A, for a LED-based load. A first step 100 of said method comprises receiving at least one feedback signal based on a sensed secondary side current with respect to a secondary side of a transformer of a flyback resonant tank of the resonant hybrid flyback converter. In addition to this, a second step 101 comprises controlling an on-time of a low-side switch of a half-bridge of the resonant hybrid flyback converter and/or an on-time of a high-side switch of the half-bridge of the resonant hybrid flyback converter on the basis of the at least one feedback signal.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A resonant hybrid flyback converter (10, 10', 30, 30') for a LED-based load (13c, 23c), the resonant hybrid flyback converter (10, 10', 30, 30') comprising:
a half-bridge (11) comprising a high-side switch (11a) and a low-side switch (11b),
a flyback resonant tank (12) comprising a transformer with a primary side (15a) and a secondary side (15b), and
a processing unit (14),
wherein the half-bridge (11) is configured to supply said primary side (15a),
wherein the secondary side (15b) is configured to supply the LED-based load (13c),
wherein the processing unit (14) is configured to receive at least one feedback signal based on a sensed secondary side current with respect to the secondary side (15b), and wherein the processing unit (14) is configured to control an on-time of the low-side switch (11b) and/or an on-time of the high-side switch (11a) on the basis of the at least one feedback signal.

2. The resonant hybrid flyback converter (10, 10', 30, 30') according to claim 1,
wherein the resonant hybrid flyback converter (10, 10', 30, 30') or the processing unit (14) comprises a current transformer (37) with a first side (37a) and a second side (37b) for sensing the secondary side current, and/or
wherein the resonant hybrid flyback converter (10, 10', 30, 30') is operated as a current-regulated resonant hybrid flyback converter and/or as a constant current source.

3. The resonant hybrid flyback converter (10, 10', 30, 30') according to claim 1 or 2,
wherein the first side (37a), especially the corresponding first winding of the current transformer (37), is connected in series to the secondary side (15b), especially the corresponding secondary winding of the transformer.

4. The resonant hybrid flyback converter (10, 10', 30, 30') according to claim 1 or 2,
wherein the first side (37a), especially the corresponding first winding of the current transformer (37), is connected in series to the secondary side (15b), especially the corresponding secondary winding of the transformer, via a diode (13e), preferably a rectifier diode.

5. The resonant hybrid flyback converter (10, 10', 30, 30') according to any of the claims 1 to 4,
wherein the at least one feedback signal comprises or is the secondary side current and/or a filtered version, preferably a lowpass filtered version, of the secondary side current.

6. The resonant hybrid flyback converter (10, 10', 30, 30') according to any of the claims 1 to 5,
wherein the resonant hybrid flyback converter (10, 10', 30, 30') or the processing unit (14) comprises a resistor (43), preferably a shunt resistor, for converting the secondary side current into a corresponding sensing voltage.

7. The resonant hybrid flyback converter (10, 10', 30, 30') according to claim 6,
wherein the at least one feedback signal comprises or is the sensing voltage.

8. The resonant hybrid flyback converter (10, 10', 30, 30') according to any of the claims 1 to 7,
wherein, especially on the basis of the at least one feedback signal or on the basis of the at least one feedback signal comprising or being the sensing voltage, the processing unit (14) is configured to monitor a peak value of the secondary side current preferably in order to detect an overcurrent situation and/or to trigger security measures, especially security measures in the sense of controlling the on-time of the low-side switch (11b) and/or the on-time of the high-side switch (11a) accordingly.

9. The resonant hybrid flyback converter (10, 10', 30, 30') according to claim 8,
wherein the security measures, especially security measures in the sense of controlling the on-time of the low-side switch (11b) and/or the on-time of the high-side switch (11a) accordingly, comprise at least one of a change of the corresponding operation frequency or duty cycle of the resonant hybrid flyback converter (10, 10', 30, 30'), or a complete switching off of the resonant hybrid flyback converter (10, 10', 30, 30'), or any combination thereof.

10. The resonant hybrid flyback converter (10, 10', 30, 30') according to any of the claims 6 to 9,
wherein the resonant hybrid flyback converter (10, 10', 30, 30') or the processing unit (14) comprises a filter, preferably a lowpass filter (44, 45), for filtering, preferably lowpass filtering, the sensing voltage in order to form a filtered version, preferably a lowpass filtered version, of the sensing voltage.

11. The resonant hybrid flyback converter (10, 10', 30, 30') according to claim 10,
wherein the at least one feedback signal comprises or is the filtered version, preferably the lowpass filtered version, of the sensing voltage.

12. The resonant hybrid flyback converter (10, 10', 30, 30') according to any of the claims 1 to 11,
wherein, especially on the basis of the at least one feedback signal or on the basis of the at least one feedback signal comprising or being the filtered version, preferably the lowpass filtered version, of the sensing voltage, the processing unit (14) is configured to compare the at least one feedback signal with at least one nominal value in order to form a function of corresponding control value difference,
wherein the processing unit (14) is preferably configured to control the on-time of the low-side switch (11b) and/or the on-time of the high-side switch (11a) in accordance with the function of the corresponding control value difference.

13. The resonant hybrid flyback converter (10, 10', 30, 30') according to any of the claims 1 to 12,
wherein the resonant hybrid flyback converter (10, 10', 30, 30') or the processing unit (14) comprises an analog-to-digital converter for digitizing the at least one feedback signal, and/or
wherein the secondary side current is exclusively sensed in every corresponding second half wave.

14. A system (200, 200', 400, 400') comprising:
a resonant hybrid flyback converter (10, 10', 30, 30') according to any of the claims 1 to 13, and
a LED-based load (13c) being supplied by said resonant hybrid flyback converter (10, 10', 30, 30').

15. A method for operating a resonant hybrid flyback converter (10, 10', 30, 30') for a LED-based load (13c), the method comprising the steps of:
receiving (100) at least one feedback signal based on a sensed secondary side current with respect to a secondary side (15b) of a transformer of a flyback resonant tank (12) of the resonant hybrid flyback converter (10, 10', 30, 30'), and
controlling (101) an on-time of a low-side switch (11b) of a half-bridge (11) of the resonant hybrid flyback converter (10, 10', 30, 30') and/or an on-time of a high-side switch (11a) of the half-bridge (11) of the resonant hybrid flyback converter (10, 10', 30, 30') on the basis of the at least one feedback signal.
